# EUROPEAN PATENT SPECIFICATION

(11) **EP 4 149 329 B1**
(45) Date of publication and mention of the grant of the patent: **13.03.2024**
(21) Application number: 21730298.3
(22) Date of filing: 11.05.2021
(51) Int. Cl.: A47J 31/16, A47J 31/52

(54) **AUTOMATIC SYSTEM AND METHOD FOR PREPARING AND DELIVERING A COFFEE BEVERAGE**
AUTOMATISCHES SYSTEM UND VERFAHREN ZUR HERSTELLUNG UND AUSGABE EINES KAFFEEGETRÄNKS
SYSTÈME AUTOMATIQUE ET PROCÉDÉ DE PRÉPARATION ET DE DISTRIBUTION D'UNE BOISSON À BASE DE CAFÉ

(30) Priority: 12.05.2020 IT 202000010612
(43) Date of publication of application: 22.03.2023
(73) Proprietor: Speranza, Vincenzo, 80131 Napoli (IT)
(72) Inventor: Speranza, Vincenzo, 80131 Napoli (IT)
(74) Representative: Garavelli, Paolo
(86) International application number: PCT/IT2021/050138
(87) International publication number: WO 2021/229618

(56) References cited:
- DE-C- 604 479
- DE-C- 887 082
- FR-A- 935 633
- GB-A- 454 824

## Description

The present invention refers to an automatic system for preparing and delivering a coffee beverage, by percolation.

The present invention also relates to a method of preparing and delivering a coffee beverage through of an automatic system.

Various types of machines for preparing a coffee beverage are known in the art: machines for preparing coffee for domestic use, moka-type coffee makers, Neapolitan-type coffee makers, and machines for preparing coffee for professional use.

In particular, the market for out-of-home consumption is an extremely complex and varied reality and is rapidly growing, polarizing the consumption of coffee in the direction of espresso coffee and pods, especially in the home, consolidating an idea of speed and efficiency typical of current times, where the frenetic pace, new technologies, markets, consumer needs affect our habits.

Also known in countercurrent is an increase in requests for the preparation of coffee using slower and more traditional methods both in preparation and consumption, without sacrificing taste, through the use of mocha or Neapolitan coffee makers.

Also known is the Neapolitan-type coffee maker, characteristic of the Neapolitan popular tradition, consisting of four elements that are assembled together: a water tank, equipped with a straight or curved handle and a very small hole placed at the top on the side; a hollow and cylindrical coffee container, inserted inside the water tank and equipped with a hole to allow the passage of boiling water, the upper portion allows the accommodation of a filter through of a thread, in order to screw it the filter; the filter, which retains the coffee powder and prevents it from remaining suspended in the final drink; a coffee beverage collection tank, equipped with a straight or curved handle and a spout, suitable for collecting the coffee beverage, positioned on the water tank.

The functioning of the known Neapolitan coffee maker provides:
- filling the boiler with water until a level is reached below the hole for the steam outlet;
- filling the coffee container without pressing it;
- screwing the filter onto the coffee container;
- joint of the coffee container, with the filter screwed on, on the tank full of water, with the two handles physically aligned and without gaps between the water tank and the coffee tank;
- heating the coffee maker under the action of a direct heat source until the boiling point of the water is reached;
- moving the coffee maker away from the heat source and overturning it, bringing the water tank above the coffee collection tank, and positioning the spout of the tank upwards;
- descent of the water due to the force of gravity, through the tank and the coffee filter; and
- obtaining by percolating the coffee beverage, and collecting it in the tank below with a variable time between 6-10 minutes.

Currently it is possible to prepare this type of coffee beverage only through the manual use of the known Neapolitan coffee maker, and through the aforementioned preparation method.

This Neapolitan coffee maker and this method of preparation have obvious disadvantages, the user must position himself near the coffee maker during the entire water heating phase to intervene and overturn the coffee maker at the appropriate time, risking to prepare a coffee that is too burnt or too watery, not respecting the correct infusion times.

It is evident that at present there is no known automatic device for preparing a coffee by gravity or by percolation, which optimizes the preparation of the coffee beverage, reducing preparation times and ensuring the repeatability of the preparation and the final quality of the coffee beverage. , depending on the coffee blend used.

Documents DE-C-887 082, GB-A-454 824, DE-C-604 479 and FR-A-935 633 describe automatic systems for preparing and delivering coffee beverage by percolation according to the prior art.

The object of the present invention is to solve the aforementioned problems of the prior art by providing an automatic system for preparing and delivering a coffee beverage by percolation.

Another object is to provide a method of preparing and delivering a coffee beverage through of an automatic system

The said and other objects and advantages of the invention, as will emerge from the following description, are achieved with an automatic system for preparing and delivering a coffee beverage, such as the one described in claim 1. Furthermore, the above and other objects and advantages The invention is achieved with a method of preparing and delivering a coffee beverage as described in claim 5. Preferred embodiments and non-trivial variants of the present invention form the subject of the dependent claims.

It is understood that all the attached claims form an integral part of the present description.

It will be immediately obvious that innumerable variations and modifications (for example relating to shape, dimensions, arrangements and parts with equivalent functionality) can be made to what has been described without departing from the scope of the invention as appears from the attached claims.

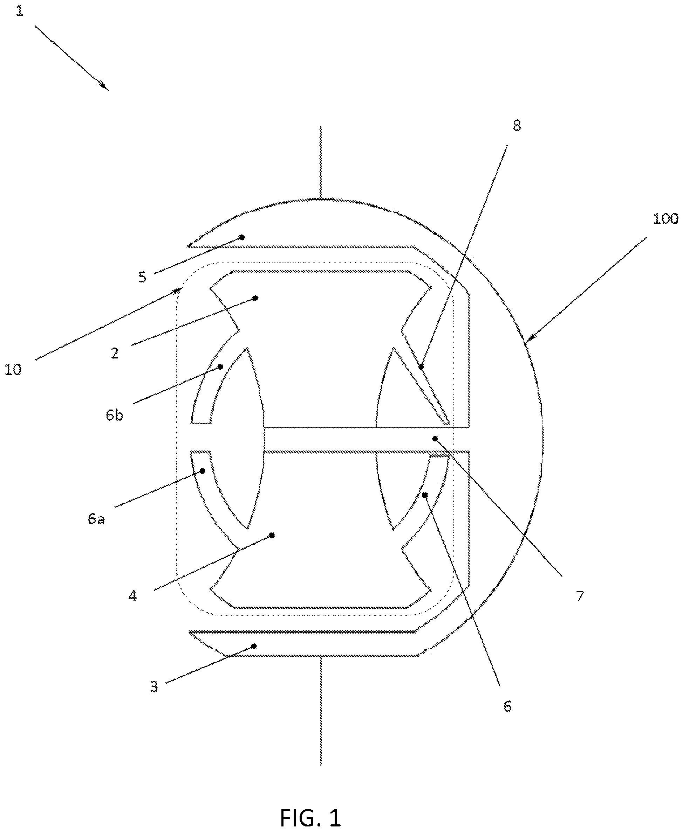

The present invention will be better described by some preferred embodiments, provided by way of non-limiting example, with reference to the attached drawing, in which the Figure shows a sectional view of a preferred embodiment of the device according to the present invention.

With reference to Figure, an automatic system 1, according to the present invention, for preparing and delivering a coffee beverage by percolation in the home or professional environment, designed to blend the main characteristics and advantages of two types of preparation of a coffee beverage, the speed and the replicability of a coffee beverage prepared using an automatic machine, and the taste and typicality of a coffee beverage prepared with a Neapolitan type coffee maker, favoring the preparation of a coffee beverage with reduced preparation times.

Advantageously, the system 1, according to the present invention, comprises:
- at least one supporting means 100 of the system 1, equipped with a plurality of structural elements and a frame, preferably provided with a C-shape;
- at least one device 10 for preparing and containing the coffee beverage, arranged in correspondence with the central portion of the supporting means 100;
- a first heating means 3, such as, for example, an induction plate or other similar disposed in the lower portion of the carrier means 100, designed to induce the heating of the water contained inside a first container means 4 of the device 10, until a water temperature value previously set by at least one user is reached;
- a second heating means 5, such as, for example, an induction plate, or other analogue opposed to the first heating means 3 arranged in the upper portion of the supporting means 100, designed to induce a pre-heating of a third container means 2 of the device 10, designed to receive the coffee beverage inside it;
- at least one robotic element 7, such as for example a robot manipulator equipped with a first end, preferably a gripper, connected to a central portion of the device 10, and a second end connected to the supporting means 100 through of a gearmotor, designed to effect a rotation of the device 10 by a plane angle through of the gearmotor connected to the end of the robotic element 7; ed
- at least one device for electronically electronic managing system 1 arranged in the carrier means 100 designed to manage the operation of the system 1.

In particular, the device 10 for preparing and containing the coffee beverage comprises:
- the first container means 4, preferably of steel or other similar material, shaped as a frustum of cone abd designed to contain an amount of water inserted manually by the user;
- a second containing means of coffee powder (not shown) arranged inside the first container means 4 and physically connected to the edge of the first container means 4 and equipped with at least one filter element, designed to contain an amount of coffee powder manually inserted by the user;
- a first handle element 6a, such as, for example, an ergonomic handle of material resistant to wear and to high temperatures, strictly connected to a side surface of the first container means 4 designed to enable a plurality of manual operations by the user ;
- the third containing means 2, preferably of steel or other similar material, shaped as a frustum of cone and equipped with a spout for delivering a coffee beverage, arranged and connected on its top to thve first container means 4, and designed to house therein said coffee beverage through percolation and to deliver the coffee beverage in at least one cup of said user through said spout; and
- a second handle element 6b such as, for example, an ergonomic handle made of wear-resistant and high-temperature resistant material, strictly connected to the side of third containing means 2, designed to facilitate the plurality of manual operations by the user.

Advantageously, the device for electronically managing device the system 1 comprises:
- at least one turning-on element, such as a switch or other similar, designed to allow the user to activate the device for electronically managing device the system 1;
- at least one wireless network card, such as a wi-fi card, or a bluetooth card designed to allow a remote management of the system 1, by connecting to a network via wireless connection through of radio waves, favoring the management and programming of the preparation and delivering of the coffee beverage by the user through a software program, or a web application installed on an electronic device, such as a PC, or a tablet, or a smartphone, or other similar, or through of an artificial intelligence system, such as "Alexa" or other similar;

- at least one electronic card designed to manage the operation of the system 1;
- at least one thermal detecting device, such as, for example, an electronic probe, or other similar, designed to detect a water temperature inside the first containing means 4;
- at least one means of detecting movement and presence, such as, for example, a sensor or other device, designed to detect the passage of water from the first containing means 4 to the third containing means 2;
- a plurality of thermal detecting means arranged in the carrier means 100 designed to detect temperature variations respectively of the first and second heating means 3, and 5.

Furthermore, the system 1 according to the present invention can be integrated into automatic and semi-automatic devices for delivering coffee beverage.

Method for preparing a coffee beverage through of the automated system 1 according to the present invention, consists of the steps of:
- providing the system 1;
- assembling the device 10 by the user;
- inserting and connecting the device 10 with the first end of the robotic element 7 of the carrier means 100 by the user, through the first and second handle elements 6a, 6b;
- turning on the system 1 by the user through the turning-on element, and activating the first heating means 3;
- heating water contained in the the first containing means 4, and reaching at least one temperature value;
- activating the second heating means 5 and pre-heating third containing means 2;
- if the temperature value measured through the thermal detecting device is equal to at least one temperature value previously set by the user, or set by a manufacturer of the system 1 depending on a type of coffee powder inserted in the first containing means 4, activating the motor-reducer connected to the robotic element 7 through the eelectronically managing device;
- automatically rotating the robotic element 7 by the plane angle;
- automatic upturning of the device 10 by the plane angle;
- transferring through fall water contained inside the first containing means 4, from the first containing means 4 into the third containing means 2 through the second containing means of coffee powder contained in the first containing means 4, and obtaining the coffee beverage;
- collecting through percolation the coffee beverage in the third containing means 2;
- detection by the means for detecting movement and presence a transfer of the coffee beverage inside the third containing means 2, and activating at least one sound warning means; and
- withdrawing by the user of the device 10 containing the coffee beverage, from the carrier means 100, through the first and second handle elements 6a, 6b.

In particular, the assembly by the user of the device 10 comprise the steps of:
- filling the first containing means 4 with water;
- filling the second containing means of coffee powder, and inserting the second containing means into the first containing means 4;
- unscrewing the third containing means 2 on the first containing means 4 through the first and second handle elements 6a, 6b.

The invention has the following advantages:
- reduces user intervention during the preparation of the coffee beverage, allowing timed programming via app or artificial intelligence systems;
- allows you to take and enjoy a coffee beverage at an optimal temperature thanks to the electronic management device integrated into the system; is
- allows you to optimize the result of the coffee beverage thanks to the ability to set the ideal water temperature required for the preparation of the coffee beverage according to the blend of coffee powder chosen.

A preferred embodiment of the invention has been described, but of course it is susceptible to further modifications and variations within the scope of the invention, as defined in the appended claims.

## Claims

1. Automatic system (1) for preparing and delivering a coffee beverage by percolation, comprising:
- at least one carrier means (100) of said system (1);
- at least one device (10) for preparing and containing said coffee beverage of said carrier means (100);
- first heating means (3) arranged in a lower portion of said carrier means (100) designed to induce a heating of water contained inside first containing means (4) of said device (10);
- second heating means (5), opposed to said first heating means (3) arranged in an upper portion of said carrier means (100), designed to induce a pre-heating of third containing means (2) of said device (10); **characterized in that** it further comprises:
- at least one robotic element (7), equipped with a first end connected to a central portion of said device (10), and a second end connected to said carrier means (100) through at least one motor-reducer, designed to perform a rotation of said device (10) by a plane angle through said motor-reducer; and
- at least one device for electronically managing said system (1) arranged in said carrier means (100) designed to manage an operation of said system (1).

2. System (1) according to the previous claim, **characterized in that** said device (10) for preparing and containing said coffee beverage comprises:
- said first water containing means (4), shaped as a frustum of cone and designed to contain an amount of water manually inserted by a user;
- second containing means of coffee powder arranged inside said containing means (4) and physically connected to an edge of said containing means (4) and equipped with at least one filter element, designed to contain an amount of coffee powder manually inserted by said user;
- a first handle element (6a), strictly connected to a side surface of said first containing means (4) designed to enable a plurality of manual operations by said user;
- said third containing means (2), shaped as a frustum of cone and equipped with a spout for delivering said coffee beverage, arranged and connected on its top to said first containing means (4), and designed to house therein said coffee beverage through percolation and to deliver the coffee beverage in at least one cup of said user through said spout; and
- a second handle element (6b) strictly connected to the side surface of said third containing means (2), designed to enable said plurality of manual operations by said user.

3. System (1) according to claim 1, **characterized in that** said device for electronically managing said system (1) comprises:
- at least one turning-on element, designed to allow said user to activate said device for electronically managing said system (1);
- at least one wireless network card, designed to allow a remote management of said system (1), enabling to manage and program said preparation and delivery of said coffee beverage by said user through at least one software program or a application installed on an electronic device, or through at least one artificial intelligence system;
- at least one electronic card designed to manage an operation of said system (1);
- at least one thermal detecting device, designed to detect a water temperature inside said first containing means (4);
- at least one means for detecting movement and presence, designed to detect a water passage from said first containing means (4) to said third containing means (2);
- a plurality of thermal detecting means arranged in said carrier means (100) and designed to detect temperature variations respectively of said first and second heating means (3, 5).

4. System (1) according to any one of the previous claims, **characterized in that** it can be integrated inside automatic and semi-automatic devices for dispensing said coffee beverage.

5. Method for preparing a coffee beverage through an automated system (1) according to any one of the previous claims, **characterized in that** it comprises the steps of:
- providing said system (1);
- assembling said device (10) by said user;
- inserting and connecting said device (10) with said first end of said robotic element (7) of said carrier means (100) by said user, through said first and second handle elements (6a), (6b);
- turning on said system (1) by said user through said turning-on element, and activating said first heating means (3);
- heating water contained in said first containing means (4), and reaching at least one temperature value;
- activating said second heating means (5), and pre-heating said third containing means (2);
- if said temperature value measured through said thermal detecting device is equal to at least one temperature value previously set by said user, or set by a manufacturer of said system (1) depending on a type of coffee powder inserted in said first containing means (4), activating said motor-reducer connected to said robotic element (7) through said electronically managing device;
- automatically rotating said robotic element (7) by said plane angle;
- automatically upturning said device (10) by said plane angle;
- transferring through fall water contained inside said first containing means (4), from said first containing means (4) in said third containing means (2) through said second containing means of coffee powder contained in said first containing means (4), and obtaining said coffee beverage;
- collecting through percolation said coffee beverage in said third containing means (2);
- detecting by said means for detecting movement and presence a transfer of said coffee beverage inside said third containing means (2), and activating at least one sound warning means; and
- withdrawing by said user said device (10) containing said coffee beverage, from said carrier means (100), through said first and second handle elements (6a), (6b).

6. Method according to the previous claim, **characterized in that** said assembling by said user of said device (10) comprises the steps of:
- filling the first containing means (4) with water;
- filling said second containing means of coffee powder, and inserting said second containing means into said first containing means (4);
- unscrewing said third containing means (2) on said first containing means (4) through said first and second handle elements (6a), (6b).

## Patentansprüche

1. Automatisches System (1) zur Zubereitung und Ausgabe eines Kaffeegetränks durch Perkolation, umfassend:
- mindestens ein Trägermittel (100) des Systems (1);
- mindestens eine Vorrichtung (10) zum Zubereiten und Aufbewahren des Kaffeegetränks des Trägermittels (100);
- ein erstes Heizmittel (3), das im unteren Teil des Trägermittels (100) angeordnet ist und dazu dient, das in einer ersten Behälterhälfte (4) der Vorrichtung (10) enthaltene Wasser zu erhitzen;
- ein zweites Heizmittel (5), das gegenüber dem ersten Heizmittel (3) im oberen Abschnitt des Tragemittels (100) angeordnet ist und dazu dient, eine Vorwärmung einer dritten Behälterhälfte (2) der Vorrichtung herbeizuführen (10);
zeichnet sich auch durch die Tatsache des Verstehens aus
- mindestens ein Roboterelement (7), das mit einem ersten Ende ausgestattet ist, das mit einem zentralen Abschnitt der Vorrichtung (10) verbunden ist, und einem zweiten Ende, das über mindestens einen Getriebemotor mit dem Tragmittel (100) verbunden ist und zum Tragen bestimmt ist eine Drehung der Vorrichtung (10) um einen flachen Winkel mittels des Getriebemotors ausführt; und
- mindestens eine elektronische Verwaltungsvorrichtung des Systems (1), die in den Trägermitteln (100) angeordnet ist und dazu bestimmt ist, den Betrieb des Systems (1) zu verwalten.

2. System (1) nach dem vorherigen Anspruch, **dadurch gekennzeichnet, dass** die Vorrichtung (10) zur Zubereitung und Aufbewahrung des Kaffeegetränks umfasst:
- die erste Hälfte des Wasserbehälters (4) hat die Form eines Kegelstumpfs und ist so gestaltet, dass er eine vom Benutzer manuell eingegebene Wassermenge aufnehmen kann;
- einen zweiten Halbbehälter mit Kaffeepulver, der im Inneren des Halbbehälters (4) angeordnet und physisch mit dem Rand des Halbbehälters (4) verbunden und mit mindestens einem Filterelement ausgestattet ist, das dazu bestimmt ist, eine eingegebene Menge Kaffeepulver aufzunehmen manuell durch den Benutzer;
- ein erstes Griffelement (6a), das eng mit der Seitenfläche der ersten Behälterhälfte (4) verbunden ist und so gestaltet ist, dass es mehrere manuelle Vorgänge durch den Benutzer erleichtert;
- besagter dritter Halbbehälter (2), kegelstumpfförmig, ausgestattet mit einer Tülle zum Ausgeben des besagten Kaffeegetränks, angeordnet und verbunden über besagtem ersten Halbbehälter (4) und so gestaltet, dass er besagtes Kaffeegetränk darin zum Perkolieren usw. aufnimmt Ausgeben des Kaffeegetränks in mindestens eine Tasse des Benutzers über den Auslauf; und
- ein zweites Griffelement (6b), das eng mit der Seitenfläche der dritten Behälterhälfte (2) verbunden ist und dazu dient, die mehreren manuellen Tätigkeiten des Benutzers zu erleichtern.

3. System (1) nach Anspruch 1, **dadurch gekennzeichnet, dass** das elektronische Verwaltungsgerät des Systems (1) umfasst:
- mindestens ein Zündelement, das dazu bestimmt ist, dem Benutzer die Aktivierung der elektronischen Verwaltungsvorrichtung des Systems (1) zu ermöglichen;
- mindestens eine drahtlose Netzwerkkarte, die für die Fernverwaltung des Systems (1) ausgelegt ist und die Verwaltung und Programmierung der Zubereitung und Ausgabe des Kaffeegetränks durch den Benutzer mithilfe mindestens eines auf einem elektronischen Gerät installierten Softwareprogramms oder einer Webanwendung erleichtert oder durch mindestens ein künstliches Intelligenzsystem;
- mindestens eine elektronische Karte, die dazu bestimmt ist, den Betrieb des Systems (1) zu verwalten;
- mindestens eine thermische Erfassungsvorrichtung, die dazu bestimmt ist, die Temperatur des Wassers im Inneren der ersten Behälterhälfte (4) zu erfassen;
- mindestens ein Mittel zur Bewegungs- und Anwesenheitserkennung, das dazu bestimmt ist, den Wasserdurchgang von der ersten Behälterhälfte (4) zur dritten Behälterhälfte (2) zu erfassen;
- eine Vielzahl von thermischen Erfassungsmitteln, die in den Trägermitteln (100) angeordnet sind und dazu dienen, Temperaturschwankungen der ersten bzw. zweiten Heizmittel (3, 5) zu erfassen.

4. System (1) nach einem der vorhergehenden Ansprüche, **dadurch gekennzeichnet, dass** es in automatische und halbautomatische Geräte zur Ausgabe des Kaffeegetränks integrierbar ist.

5. Verfahren zur Zubereitung des Kaffeegetränks mittels des automatisierten Systems (1) nach einem der vorhergehenden Ansprüche, **dadurch gekennzeichnet, dass** es die folgenden Phasen umfasst:
- Vorbereitung des Systems (1);
- Zusammenbau des Geräts (10) durch den Benutzer;
- Einführen und Verbinden der Vorrichtung (10) mit dem ersten Ende des Roboterelements (7) des Tragemittels (100) durch den Benutzer mittels der ersten und zweiten Griffelemente (6a), (6b);
- Zündung des Systems (1) durch den Benutzer unter Verwendung des Zündelements und Aktivierung des ersten Heizmittels (3);
- Erhitzen des in der ersten Behälterhälfte (4) enthaltenen Wassers und Erreichen mindestens eines Temperaturwerts;
- Aktivierung des zweiten Heizmittels (5) und Vorheizen der dritten Behälterhälfte (2);
- wenn der von der thermischen Erfassungsvorrichtung gemessene Temperaturwert mindestens einem Temperaturwert entspricht, der zuvor vom Benutzer oder von einem Hersteller des Systems (1) in Abhängigkeit von der in die erste Behälterhälfte eingefüllten Kaffeepulversorte eingestellt wurde (4) Aktivierung des Getriebemotors, der mit dem Roboterelement (7) verbunden ist, mittels der elektronischen Verwaltungsvorrichtung;
- automatische Drehung des Roboterelements (7) um den flachen Winkel;
- automatisches Umdrehen der Vorrichtung (10) der flachen Ecke und Anordnung der ersten Containerhälfte (4) auf der dritten Containerhälfte (2);
- Übertragen des in der ersten Behälterhälfte (4) enthaltenen Wassers durch Fallenlassen von Kaffeepulver, das in der ersten Behälterhälfte (4) enthalten ist, von der ersten Behälterhälfte (4) in die dritte Behälterhälfte (2) durch die zweite Behälterhälfte, und Erhalten des Kaffeegetränks;
- Sammeln des Kaffeegetränks durch Versickern in der dritten Behälterhälfte (2);
- Erkennen des Vorhandenseins der Übertragung des Kaffeegetränks in die dritte Behälterhälfte (2) durch das Bewegungserkennungsmittel und Aktivierung mindestens eines akustischen Warnmittels; und
- Entfernen der das Kaffeegetränk enthaltenden Vorrichtung (10) vom Trägermittel (100) durch den Benutzer unter Verwendung der ersten und zweiten Griffelemente (6a), (6b).

6. Verfahren nach dem vorhergehenden Anspruch, **dadurch gekennzeichnet, dass** die Montage des Geräts (10) durch den Benutzer aus den folgenden Phasen besteht:
- Füllen des ersten Halbbehälters (4) mit Wasser;
- Füllen der zweiten Behälterhälfte mit Kaffeepulver und Einsetzen der zweiten Behälterhälfte in die erste Behälterhälfte (4);
- Aufschrauben des dritten Halbbehälters (2) auf den ersten Halbbehälter (4) unter Verwendung der ersten und zweiten Griffelemente (6a), (6b).

## Revendications

1. Système automatique (1) de préparation et de distribution d'une boisson au café par percolation comprenant:
- au moins un moyen porteur (100) dudit système (1);
- au moins un dispositif (10) pour préparer et contenir ladite boisson au café dudit moyen porteur (100);
- un premier moyen de chauffage (3) disposé dans la partie inférieure dudit moyen porteur (100) conçu pour induire un chauffage de l'eau contenue à l'intérieur d'une première moitié de récipient (4) dudit dispositif (10);
- un deuxième moyen de chauffage (5), opposé audit premier moyen de chauffage (3) disposé dans la partie supérieure dudit moyen de transport (100), conçu pour induire un préchauffage d'une troisième moitié de récipient (2) dudit dispositif (10);
**caractérisé par** le fait de comprendre également
- au moins un élément robotique (7), équipé d'une première extrémité reliée à une partie centrale dudit dispositif (10), et d'une deuxième extrémité reliée auxdits moyens de support (100) au moyen d'au moins un motoréducteur, destiné à porter effectuer une rotation dudit dispositif (10) d'un angle plat au moyen dudit motoréducteur; et
- au moins un dispositif électronique de gestion dudit système (1) disposé dans lesdits moyens de support (100) conçu pour gérer le fonctionnement dudit système (1).

2. Système (1) selon la revendication précédente, **caractérisé en ce que** ledit dispositif (10) de préparation et de confinement de ladite boisson au café comprend:
- ledit premier demi récipient (4) d'eau, de forme tronconique destiné à contenir une quantité d'eau insérée manuellement par ledit utilisateur;
- un deuxième demi-récipient de café en poudre disposé à l'intérieur dudit demi-récipient (4) et relié physiquement au bord dudit demi-récipient (4) et équipé d'au moins un élément filtrant, conçu pour contenir une quantité de café en poudre entrée manuellement par ledit utilisateur;
- un premier élément de poignée (6a), intimement relié à la surface latérale dudit premier demi-récipient (4) conçu pour faciliter une pluralité d'opérations manuelles par ledit utilisateur;
- ledit troisième demi-récipient (2), de forme tronconique équipé d'un bec verseur de distribution de ladite boisson au café, disposé et relié au-dessus dudit premier demi-récipient (4), et conçu pour accueillir à l'intérieur de celui-ci ladite boisson au café pour percolation et pour distribuer la boisson au café dans au moins une tasse dudit utilisateur via ledit bec verseur; et
- un deuxième élément de préhension (6b) intimement relié à la surface latérale de ladite troisième moitié de récipient (2), conçu pour faciliter ladite pluralité d'opérations manuelles par ledit utilisateur.

3. Système (1) selon la revendication 1, **caractérisé en ce que** ledit dispositif électronique de gestion dudit système (1) comprend:
- au moins un élément d'allumage, conçu pour permettre audit utilisateur d'activer ledit dispositif électronique de gestion dudit système (1);
- au moins une carte réseau sans fil, conçue pour permettre une gestion à distance dudit système (1), facilitant la gestion et la programmation de ladite préparation et distribution de ladite boisson au café par ledit utilisateur à l'aide d'au moins un logiciel ou application web installé sur un appareil électronique , ou via au moins un système d'intelligence artificielle;
- au moins une carte électronique destinée à gérer le fonctionnement dudit système (1);
- au moins un dispositif de détection thermique, conçu pour détecter la température de l'eau à l'intérieur dudit premier demi-récipient (4);
- au moins un moyen de détection de mouvement et de présence, conçu pour détecter le passage de l'eau dudit premier demi-récipient (4) vers ledit troisième demi-récipient (2);
- une pluralité de moyens de détection thermique disposés dans lesdits moyens porteurs (100) conçus pour détecter les variations de température desdits premier et deuxième moyens de chauffage (3, 5) respectivement.

4. Système (1) selon l'une quelconque des revendications précédentes, **caractérisé par le fait qu'**il peut être intégré dans des dispositifs automatiques et semi-automatiques de distribution de ladite boisson au café.

5. Procédé de préparation de ladite boisson au café au moyen dudit système automatisé (1) selon l'une quelconque des revendications précédentes, **caractérisé en ce qu'**il comprend les phases de:
- préparation dudit système (1);
- assemblage dudit dispositif (10) par ledit utilisateur;
- insertion et connexion dudit dispositif (10) avec ladite première extrémité dudit élément robotique (7) dudit moyen de transport (100) par ledit utilisateur, au moyen desdits premier et deuxième éléments de préhension (6a), (6b);
- allumage dudit système (1) par ledit utilisateur à l'aide dudit élément d'allumage, et activation desdits premiers moyens de chauffage (3);
- chauffer l'eau contenue dans ledit premier demi-récipient (4), et atteindre au moins une valeur de température;
- activation desdits seconds moyens de chauffage (5) et préchauffage de ladite troisième moitié de récipient (2);
- si ladite valeur de température mesurée par ledit dispositif de détection thermique est égale à au moins une valeur de température préalablement fixée par ledit utilisateur, ou fixée par un fabricant dudit système (1) en fonction d'un type de café en poudre inséré dans ledit premier demi-récipient (4), activation dudit motoréducteur relié audit élément robotique (7) au moyen dudit dispositif électronique de gestion;
- rotation automatique dudit élément robotique (7) selon ledit angle plat;
- retournement automatique dudit dispositif (10) dudit coin plat et disposition dudit premier demi-récipient (4) sur ledit troisième demi-conteneur (2);
- transfert par chute de l'eau contenue à l'intérieur dudit premier demi-récipient (4), depuis ledit premier demi-récipient (4) vers ledit troisième demi-récipient (2) en passant par ledit deuxième demi-récipient de café en poudre contenu dans ledit premier demi-récipient (4), et obtenir ladite boisson au café;
- collecte par percolation de ladite boisson au café dans ledit troisième demi-récipient (2);
- détection par lesdits moyens de détection de mouvement et de la présence du transfert de ladite boisson au café à l'intérieur dudit troisième demi-récipient (2), et activation d'au moins un moyen d'avertissement sonore; et
- retrait par ledit utilisateur dudit dispositif (10) contenant ladite boisson au café, dudit moyen de support (100), à l'aide desdits premier et deuxième éléments de préhension (6a), (6b).

6. Procédé selon la revendication précédente, **caractérisé en ce que** ledit assemblage par ledit utilisateur dudit dispositif (10) comprend les phases de:
- remplir le premier demi-récipient (4) avec de l'eau;
- remplir ledit deuxième demi-récipient avec de la poudre de café, et insérer ledit deuxième demi-récipient dans ledit premier demi-récipient (4);
- vissage dudit troisième demi-récipient (2) sur ledit premier demi-récipient (4) à l'aide desdits premier et deuxième éléments de préhension (6a), (6b).
